# EUROPÄISCHE PATENTSCHRIFT

(11) **EP 2 431 830 B1**
(45) Veröffentlichungstag und Bekanntmachung des Hinweises auf die Patenterteilung: **05.03.2014**
(21) Anmeldenummer: 11181739.1
(22) Anmeldetag: 19.09.2011
(51) Int. Cl.: G05D 23/19, G01R 19/165, G06F 1/28, H02J 3/00, H02H 3/24, H02P 1/00, H05B 1/02, H02H 1/06, H02H 3/04, H02H 3/247, H02J 3/14

(54) **Regeleinrichtung für ein wärmetechnisches Gerät**
Regulating device for a heating device
Dispositif de réglage pour un appareil thermodynamique

(30) Priorität: 21.09.2010 DE 102010046223
(43) Veröffentlichungstag der Anmeldung: 21.03.2012
(73) Patentinhaber: Robert Bosch GmbH, 70442 Stuttgart (DE)
(72) Erfinder: Cuenca Garcia, Felipe, 35099 Burgwald-Ernsthausen (DE); Wibring, Joakim, 57334 Tranas (SE); Karmskog, Dick, 57339 Tranas (SE)

(56) Entgegenhaltungen:
- EP-A2- 0 875 986
- DE-A1- 3 332 368
- US-A- 5 691 870

## Beschreibung

Die Erfindung betrifft eine Regeleinrichtung für ein wärmetechnisches Gerät zum Heizen und/oder Kühlen nach dem Oberbegriff des Patentanspruches 1.

Eine gattungsgemäßes wärmetechnisches Gerät zum Heizen und/oder Kühlen in einem Heiz- oder Kühlsystem besitzt mindestens eine Regeleinrichtung zum Steuern und Regeln des Betriebes. Dies betrifft in der Regel fast alle Komponenten eines Heiz- oder Kühlsystems. Dazu gehören beispielsweise die Regeleinrichtung selbst, Brenner, Gebläse, Pumpen, Kompressoren, Vorwärmungseinrichtungen, Fernbedienungseinrichtungen sowie diverse Stellglieder. Sowohl die Regeleinrichtung selbst als auch die Komponenten umfassen Strom verbrauchende elektrotechnische Bauteile, welche mit Netzspannung versorgt werden. Alle aktiven elektrotechnischen Komponenten sind daher an die Regeleinrichtung angeschlossen. Dies erfolgt jeweils an einen zugeordneten Ausgang an einem Mikroprozessor, über den beispielsweise mit einer Gerätekleinspannung über Relais die jeweilige Netzspannung zu- oder abgeschaltet werden kann. An Regelgeräten von wärmetechnischen Geräten, aber auch an Komponenten sind außerdem Anzeige- und Bedienelemente bekannt. Zudem gibt es Serviceeinrichtungen zur Signalübermittlung, wahlweise mit Fernüberwachung.

Insbesondere sogenannte Schaltnetzteile haben sich immer mehr durchgesetzt, weil diese sich zum Beispiel an die jeweilige Netzspannung am Aufstellort anpassen lassen und damit auch Standby-Verluste minimiert werden können. Die sekundärseitige Gerätekleinspannung dient zum Versorgen von elektrotechnischen Bauteilen, Regel- und Schalteinrichtungen zum sowie Regeln, Ein- und Ausschalten von an das Regelgerät an zugeordneten Ausgängen angeschlossenen elektrotechnischen Komponenten.

Auf Spannungsschwankungen reagieren die angeschlossenen Komponenten unterschiedlich. Dies hängt mit ihrer Bauart zusammen. So sind bei Unterschreitung der üblichen Netzspannung zum Beispiel Pumpen relativ unproblematisch und Kompressoren von Wärmepumpensystemen besonders anfällig, weil diese kurzzeitiges Takten, insbesondere auf der Kältemittelseite, nicht vertragen und dadurch beschädigt werden können.

Aus dem Dokument EP 0 875 986 A2 sind Steuervorrichtungen mit Unterspannungsschutz bekannt, welche mittels eines Mikroprozessors empfindliche Verbraucher abschalten oder seine Zuschaltung verhindern.

Reine Netzspannungsüberwachungseinrichtungen sind aus dem Stand der Technik bekannt. Dabei wir ausschließlich die Primärseite einer Regeleinrichtung überwacht. Sinkt die Netzspannung nun unter einen festen Schwellwert, wird möglicherweise die gesamte Regeleinrichtung und somit die gesamte damit in Verbindung stehende Anlage abgeschaltet. Gleiches geschieht auch, wenn sekundärseitig die Gerätekleinspannung soweit abfällt, dass einzelne Relais selbsttätig, aber leider unkontrolliert arbeiten. Bei Heizungssystemen kommt es dann zu Komforteinbußen durch ausbleibende Wärme- oder Kälteversorgung, Frostgefahr durch fehlende Umwälzung in Heizkreisläufen oder Verunsicherung von Nutzern bzw. Bedienern durch Abschaltung von Regelungskomponenten, insbesondere von Anzeigevorrichtungen. Anrufe bei Fachfirmen und Serviceeinsätze, besonders in Regionen mit relativ instabilen Stromnetzen, sind dann die Folgen.

Schaltnetzteile haben aber die Eigenschaft, dass die Sekundärspannung nicht proportional der Primärspannung folgt, wie es ansonsten im Zusammenhang mit einem linearen Netzteil der Fall ist. Bei einer Verwendung Netzspannungsüberwachungseinrichtungen in Verbindung mit einem Schaltnetzteil zur Absicherung des Anlagenbetriebes bzw. einer gattungsgemäßen Regeleinrichtung ist es daher möglich, dass auf der Sekundärseite die Gerätekleinspannung nicht mehr im normalen Bereich liegt, obwohl die primärseitige Netzspannungsüberwachungseinrichtungen keine Auffälligkeiten detektiert.

Umgekehrt kann es im Zusammenhang mit Schaltnetzteilen vorkommen, dass auf der Sekundärseite die Gerätekleinspannung im normalen Bereich liegt und alle elektronischen Bauteile und zugeordneten Ausgänge ausreichend versorgt sind, gleichzeitig aber auf der Primärseite die Netzspannung soweit abgefallen ist, dass einzelne Relais der angeschlossenen Komponenten schließen oder ins Ein-/Aus-Takten geraten und -wie bereits erwähnt - dadurch Störungen oder langfristige Schädigungen an Komponenten auftreten können.

Der Erfindung liegt daher die Aufgabe zu Grunde, die Betriebssicherheit und Robustheit eines wärmetechnischen Gerät zum Heizen und/oder Kühlen, insbesondere im Hinblick auf Netzspannungsschwankungen, zu optimieren.

Erfindungsgemäß wurde dies mit den Merkmalen des Patentanspruches 1 gelöst. Vorteilhafte Weiterbildungen sind den Unteransprüchen zu entnehmen.

Die Regeleinrichtung für ein wärmetechnisches Gerät ist dadurch gekennzeichnet, dass die Netzspannung auf der Primärseite des Schaltnetzteils und die Gerätekleinspannung auf der Sekundärseite gemessen und ausgewertet werden, und dass mindestens eine an das Regelgerät angeschlossene elektrotechnische Komponente abgeschaltet wird, wenn mindestens einer der gemessenen Spannungswerte vorgebbare Spannungs-Schwellwerte für einzelne angeschlossene Bauteile und Komponenten unterschreitet.

In einer bevorzugten Ausführungsform sind für die an zugeordneten Ausgängen angeschlossenen elektrotechnischen Komponenten jeweils einzelne, unabhängige Spannungs-Schwellwerte vorgebbar und/oder werden mit der Belegung eines Ausgangs durch eine Komponente aus hinterlegten Werten bei der Installation aktiviert.

Vorteilhafterweise ist eine Abschalt-Reihenfolge und/oder eine Priorisierung für die an zugeordneten Ausgängen angeschlossenen elektrotechnischen Komponenten vorgebbar und/oder hinterlegt, um im Falle einer Abschaltung noch die bestmögliche Anlagenfunktion bzw. den bestmöglichen Komfort zu erhalten.

Bei einer weiteren Ausführungsform ist die Zuschaltung von weiteren elektrotechnischen Komponenten blockiert, wenn vorher mindestens eine andere Komponente wegen Unterschreitung eines zugeordneten Spannungs-Schwellwertes abgeschaltet wurde. Damit können weitere sich möglicherweise ergebende Einschalt-Spitzen verhindert werden.

In noch einer weiteren Ausführungsform sind für die an zugeordneten Ausgängen angeschlossenen elektrotechnischen Komponenten jeweils einzelne, unabhängige Zeitspannen für die Dauer einer Unterschreitung eines zugeordneten Spannungs-Schwellwertes vom ersten Detektieren bis zur Abschaltung vorgebbar und/oder werden mit der Belegung eines Ausgangs durch eine Komponente aus hinterlegten Werten bei der Installation aktiviert. Je nach Empfindlichkeit der einzelnen Komponenten ist es damit möglich, Spannungsabfälle von ganz kurzer Dauer auszufiltern, ohne dass eine Abschaltreaktion eintritt. Hierbei handelt es sich um Zeiten im Millisekundenbereich.

Die Wiedereinschaltung nach einer vorhergegangenen Abschaltung wegen Unterschreitung eines zugeordneten Spannungs-Schwellwertes wird erfindungsgemäß verzögert, indem für die an zugeordneten Ausgängen angeschlossenen elektrotechnischen Komponenten jeweils einzelne, unabhängige Zeitspannen für die Wartezeit zwischen Abschaltung und Wiedereinschaltung vorgebbar sind und/oder mit der Belegung eines Ausgangs durch eine Komponente aus hinterlegten Werten bei der Installation aktiviert werden. Ein Beispiel hierzu ist ein Kompressor einer Wärmepumpe, welcher eine Wartezeit von mehreren Minuten nach einer Abschaltung benötigt, um wieder optimal zu starten.

Vorteilhafterweise werden an zugeordneten Ausgängen angeschlossene elektrotechnische Komponenten mit Sicherheitsrelevanz für das Heiz- oder Kühlgerät oder ein angeschlossenes Heiz- oder Kühlsystem zuletzt abgeschaltet. Dazu gehören beispielsweise Umwälzpumpen in Heiz- oder Kühlkreisen und Überwachungsfunktionen im Zusammenhang mit Temperaturfühlern, beispielsweise um den Frostschutz einer Anlage zu gewährleisten, oder auch Komponenten für die Feuerungsautomation.

Generell wird eine Abschaltung von elektrotechnischen Komponenten wegen Unterschreitung eines zugeordneten Spannungs-Schwellwertes in einen Fehler- und/oder Historienspeicher eingetragen.

Vorzugsweise erfolgt dies aber nur bei größerer Häufigkeit, insbesondere bei Überschreiten einer vorgebbaren Zahl von Abschaltungen in einem vorgebbaren Zeitraum, um wirkliche elektrische Fehler von eventuell einer nur einmalig und zufällig aufgetretenen Netzschwankung zu unterscheiden. Dies erleichtert die Auswertung im Servicefall.

Weiterhin wird in einer Anzeige- und Bedieneinrichtung die Abschaltung von elektrotechnischen Komponenten wegen Unterschreitung eines zugeordneten Spannungs-Schwellwertes mindestens für die Dauer der Abschaltung signalisiert, um den Bediener zum aktuellen Kontrollzeitpunkt korrekt den Betriebszustand wiederzuspiegeln, und um Fehlinterpretationen, beispielsweise durch Wahrnehmung abgeschalteter Komponenten, gleich auszuschließen. Dagegen wird ein Wartungs- oder Störungssignal, welches insbesondere als Handlungsaufforderung für Nutzer und/oder Servicepersonal gedacht ist, vorzugsweise erst bei Überschreiten einer vorgebbaren Zahl von Abschaltungen in einem vorgebbaren Zeitraum ausgegeben.

Mit der Erfindung werden die Betriebssicherheit und Robustheit eines wärmetechnischen Gerätes zum Heizen und/oder Kühlen, insbesondere im Hinblick auf Netzspannungsschwankungen, optimiert. Sobald die Spannung aus dem Netz und/oder sekundärseitig als Gerätekleinspannung vorgebbare Spannungs-Schwellwerte unterschreitet, wird mindestens eine an das Regelgerät angeschlossene elektrotechnische Komponente abgeschaltet. Somit ist es erfindungsgemäß gezielt möglich, für einzelne angeschlossene Bauteile und Komponenten die maximale Betriebssicherheit und für die gesamte Anlage die maximale Funktionsfähigkeit und somit auch maximalen Komfort für einen Anlagennutzer zu gewährleisten. Die Anforderungen der einzelnen Komponenten sind vorgebbar, so dass die Regeleinrichtung automatisch priorisieren kann, welche Komponenten die höchste Empfindlichkeit bei zu niedriger Spannung aufweisen und - passend zum jeweils aktuellen Betriebszustand von Gerät- und System - zuerst abzuschalten sind.

Insbesondere in Verbindung mit dem Einsatz von Schaltnetzteilen ergeben sich erfindungsgemäß gegenüber dem Stand der Technik, der nur eine Komplettabschaltung eines Gesamtsystems bei Netzspannungsunterschreitung kennt, deutliche Vorteile für den Heiz-oder Kühlgeräte-Betrieb. Auch ein Betreiber oder Nutzer des wärmetechnischen Gerätes oder des Heiz- oder Kühlsystems wird auf die Unregelmäßigkeit hingewiesen. Dies kann in einem ersten Schritt nur vorübergehend, also nur bei kurzzeitiger Abschaltung mindestens einer Komponente, oder in einem zweiten Schritt auch als Stör- oder Wartungsmeldung, wenn sich eine Abschaltungshäufung ergibt.

Die Erfindung bringt Sicherheit für Installateur und Betreiber, hilft Komponentenschädigungen durch eine zu niedrige Betriebsspannung zu verhindern und hilft generell, elektrische Fehler schnell zu erkennen bzw. zu vermeiden.

Die Zeichnung stellt ein Ausführungsbeispiel der Erfindung dar. Es zeigt:
- Fig. 1:: schematisch eine Spannungsversorgung in einer Regeleinrichtung eines wärmetechnischen Gerätes und
- Fig. 2:: schematisch den Spannungsverlauf der Netzspannung sowie der Gerätekleinspannung am Ausgang für eine an der Regeleinrichtung angeschlossenen Komponenten.

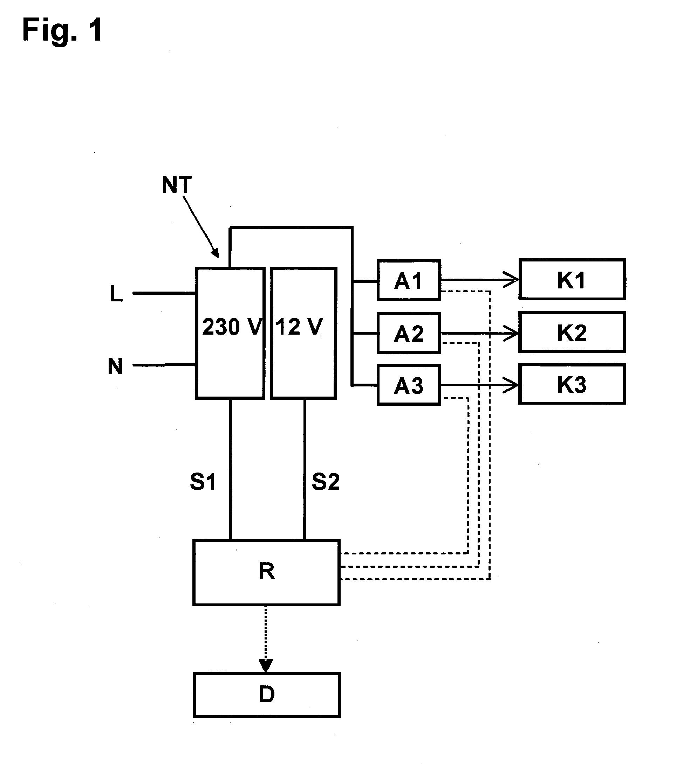

Gemäß Fig. 1 umfasst die Regeleinrichtung R für ein wärmetechnisches Gerät zum Heizen und/oder Kühlen im Wesentlichen ein mit Netzspannung versorgtes Schaltnetzteil NT, welches auf der Sekundärseite Gerätekleinspannung, hier beispielhaft mit 12 V gezeigt, bereit stellt.

Diese dient zum Versorgen von elektrotechnischen Bauteilen, Regel- und Schalteinrichtungen zum Regeln, Ein- und Ausschalten von an die Regeleinrichtung R an zugeordneten, von der Regeleinrichtung R geschalteten Ausgängen A1, A2, A3 angeschlossenen elektrotechnischen Komponenten K1, K2, K3, welche mit Netzspannung versorgt werden. Angeschlossen ist weiterhin ein Display D als Anzeige-, Bedien- und Serviceeinrichtung, wahlweise mit Fernüberwachung.

Die Netzspannung S1 auf der Primärseite des Schaltnetzteils und die Gerätekleinspannung S2 auf der Sekundärseite werden gemessen und von der Regeleinrichtung R ausgewertet. Es wird mindestens eine an das Regelgerät R angeschlossene elektrotechnische Komponente K1, K2, K3 abgeschaltet, wenn mindestens einer der gemessenen Spannungswerte S1, S2 vorgebbare Spannungs-Schwellwerte für einzelne angeschlossene Bauteile und Komponenten K1, K2, K3 unterschreitet.

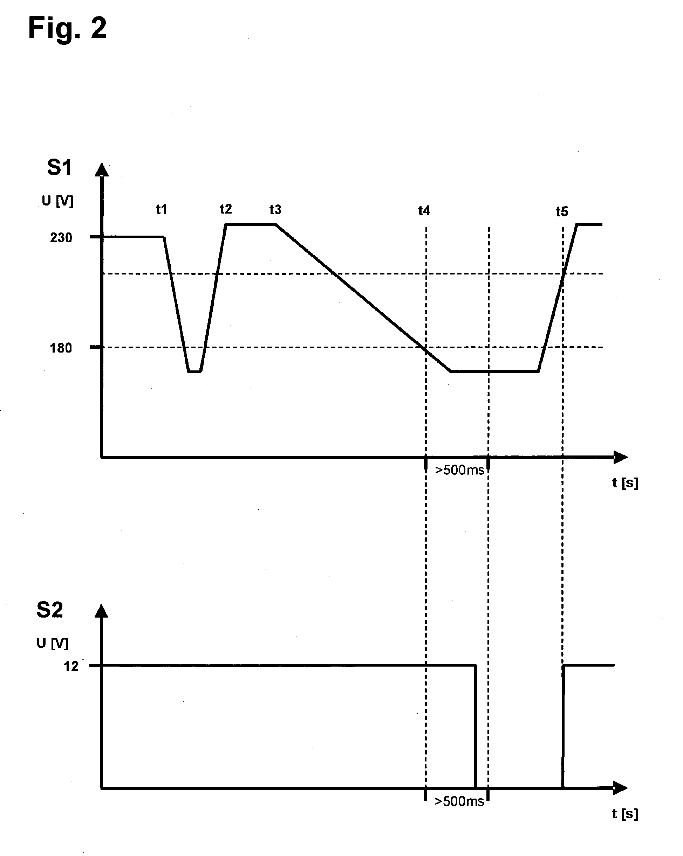

Fig. 2 zeigt schematisch und beispielhaft den Spannungsverlauf der Netzspannung S1 sowie der Gerätekleinspannung S2 am Ausgang für die an der Regeleinrichtung R angeschlossenen Komponenten K1, K2, K3. Über die Zeit betrachtet beginnt der Netzspannungsverlauf S1 mit 230 V, bevor im Zeitraum zwischen t1 und t2 ein kurzzeitiger Spannungsabfall folgt. Dieser bleibt im Spannungsverlauf für die Gerätekleinspannung S2 ohne Folgen, da von so kurzer Dauer, dass kein Einfluss auf angeschlossene Komponenten K1, K2, K3 zu erwarten ist.

Ab dem Zeitpunkt t3 fällt die Netzspannung S1 kontinuierlich ab und erreicht zum Zeitpunkt t4 eine für einen angeschlossene Komponente K1, K2, K3 vorgegebenen, für diese als kritisch eingestuften, charakteristischen Spannungswert S1 von 180 V. Erfindungsgemäß läuft ab dieser Unterschreitung des Spannungs-Schwellwertes eine vorgebbare Zeitspanne für die zulässige Dauer einer Unterschreitung vom ersten Detektieren bis zur Abschaltung einer Komponente K1, K2, K3. Beispielhaft sind dafür hier 500 ms angenommen. In dieser Zeitspanne wird mindestens eine Komponente K1, K2, K3 abgeschaltet, so dass auch die Gerätekleinspannung S2 von 12 V auf Null abfällt.

Sobald die Netzspannung S1 wieder steigt und in t5 einen vorgegebenen Schwellwert für die Einschaltung einer Komponente K1, K2, K3 erreicht hat, tritt wieder Normalbetrieb ein. Am Display D wird somit die Abschaltung einer Komponente K1, K2, K3 wegen Unterschreitung eines zugeordneten Spannungs-Schwellwertes mindestens für die Dauer der Abschaltung, also bis zum Zeitpunkt t5, signalisiert. Erst bei Überschreiten einer vorgebbaren Zahl von Abschaltungen in einem vorgebbaren Zeitraum wird ein Wartungs- oder Störungssignal ausgegeben.

## Patentansprüche

1. Regeleinrichtung (R) für ein wärmetechnisches Gerät zum Heizen und/oder Kühlen mit einem mit Netzspannung (S1) versorgten Schaltnetzteil (NT) und sekundärseitiger Gerätekleinspannung (S2) zum Versorgen von elektrotechnischen Bauteilen, Regel- und Schalteinrichtungen zum Regeln, Ein- und Ausschalten von an die Regeleinrichtung an zugeordneten Ausgängen angeschlossenen elektrotechnischen Komponenten (K1, K2, K3), welche mindestens teilweise mit Netzspannung (S1) versorgt werden, sowie mit mindestens einer Anzeige-, Bedien- und Serviceeinrichtung, wahlweise mit Fernüberwachung, **dadurch gekennzeichnet, dass** die Netzspannung (S1) auf der Primärseite des Schaltnetzteils (NT) und die Gerätekleinspannung (S2) auf der Sekundärseite gemessen und ausgewertet werden, und dass mindestens eine an das Regelgerät angeschlossene elektrotechnische Komponente (K1, K2, K3) abgeschaltet wird, wenn mindestens einer der gemessenen Spannungswerte vorgebbare Spannungs-Schwellwerte für einzelne angeschlossene Bauteile und Komponenten (K1, K2, K3) unterschreitet.

2. Regeleinrichtung (R) nach Anspruch 1,
**dadurch gekennzeichnet, dass** für die an zugeordneten Ausgängen angeschlossenen elektrotechnischen Komponenten (K1, K2, K3) jeweils einzelne, unabhängige Spannungs-Schwellwerte vorgebbar sind und/oder mit der Belegung eines Ausgangs (A1, A2, A3) durch eine Komponente (K1, K2, K3) aus hinterlegten Werten bei der Installation aktiviert werden.

3. Regeleinrichtung (R) nach Anspruch 1 oder 2,
**dadurch gekennzeichnet, dass** eine Abschalt-Reihenfolge und/oder eine Priorisierung für die an zugeordneten Ausgängen (A1, A2, A3) angeschlossenen elektrotechnischen Komponenten (K1, K2, K3) vorgebbar und/oder hinterlegt ist.

4. Regeleinrichtung (R) nach einem der Ansprüche 1 bis 3,
**dadurch gekennzeichnet, dass** die Zuschaltung von weiteren elektrotechnischen Komponenten (K1, K2, K3) blockiert ist, wenn vorher mindestens eine andere Komponente (K1, K2, K3) wegen Unterschreitung eines zugeordneten Spannungs-Schwellwertes abgeschaltet wurde.

5. Regeleinrichtung (R) nach einem der Ansprüche 1 bis 4,
**dadurch gekennzeichnet, dass** für die an zugeordneten Ausgängen (A1, A2, A3) angeschlossenen elektrotechnischen Komponenten (K1, K2, K3) jeweils einzelne, unabhängige Zeitspannen für die Dauer einer Unterschreitung eines zugeordneten Spannungs-Schwellwertes vom ersten Detektieren bis zur Abschaltung vorgebbar sind und/oder mit der Belegung eines Ausgangs (A1, A2, A3) durch eine Komponente (K1, K2, K3) aus hinterlegten Werten bei der Installation aktiviert werden.

6. Regeleinrichtung (R) nach einem der Ansprüche 1 bis 5,
**dadurch gekennzeichnet, dass** für die an zugeordneten Ausgängen (A1, A2, A3) angeschlossenen elektrotechnischen Komponenten (K1, K2, K3) jeweils einzelne, unabhängige Zeitspannen vorgebbar sind und/oder mit der Belegung eines Ausgangs (A1, A2, A3) durch eine Komponente (K1, K2, K3) aus hinterlegten Werten bei der Installation aktiviert werden, welche die Wiedereinschaltung nach einer vorhergegangenen Abschaltung wegen Unterschreitung eines zugeordneten Spannungs-Schwellwertes verzögern.

7. Regeleinrichtung (R) nach einem der Ansprüche 1 bis 6,
**dadurch gekennzeichnet, dass** an zugeordneten Ausgängen (A1, A2, A3) angeschlossene elektrotechnische Komponenten (K1, K2, K3) mit Sicherheitsrelevanz für das wärmetechnische Gerät oder ein angeschlossenes Heiz- und/oder Kühlsystem zuletzt abgeschaltet werden.

8. Regeleinrichtung (R) nach einem der Ansprüche 1 bis 7,
**dadurch gekennzeichnet, dass** die Abschaltung von elektrotechnischen Komponenten (K1, K2, K3) wegen Unterschreitung eines zugeordneten Spannungs-Schwellwertes in einen Fehler- und/oder Historienspeicher eingetragen wird.

9. Regeleinrichtung (R) nach einem der Ansprüche 1 bis 8,
**dadurch gekennzeichnet, dass** die Abschaltung von elektrotechnischen Komponenten (K1, K2, K3) wegen Unterschreitung eines zugeordneten Spannungs-Schwellwertes nur bei größerer Häufigkeit, insbesondere bei Überschreiten einer vorgebbaren Zahl von Abschaltungen in einem vorgebbaren Zeitraum, in einen Fehler- und/oder Historienspeicher eingetragen wird.

10. Regeleinrichtung (R) nach einem der Ansprüche 1 bis 9,
**dadurch gekennzeichnet, dass** die Abschaltung von elektrotechnischen Komponenten (K1, K2, K3) wegen Unterschreitung eines zugeordneten Spannungs-Schwellwertes in einer Anzeige- und Bedieneinrichtung mindestens für die Dauer der Abschaltung signalisiert wird, und dass bei Überschreiten einer vorgebbaren Zahl von Abschaltungen in einem vorgebbaren Zeitraum ein Wartungs- oder Störungssignal ausgegeben wird.

## Claims

1. Regulating device (R) for a thermal heating and/or cooling apparatus with a switched-mode power supply (NT) supplied with mains voltage (S1) and with a secondary-side apparatus low voltage (S2) for supplying electrical parts, regulating and switching devices for regulating and switching electrical components (K1, K2, K3) on and off, which components are connected to associated outputs of the regulating device and are at least partially supplied with mains voltage (S1), and with at least one display, operating and servicing device, optionally with remote monitoring, **characterized in that** the mains voltage (S1) on the primary side of the switched-mode power supply (NT) and the apparatus low voltage (S2) on the secondary side are measured and evaluated, and **in that** at least one electrical component (K1, K2, K3) connected to the regulating apparatus is switched off if at least one of the measured voltage values undershoots predefinable voltage threshold values for individual connected parts and components (K1, K2, K3).

2. Regulating device (R) according to Claim 1, **characterized in that** individual, independent voltage threshold values can be respectively predefined for the electrical components (K1, K2, K3) connected to associated outputs and/or are activated from stored values during installation when an output (A1, A2, A3) is occupied by a component (K1, K2, K3).

3. Regulating device (R) according to Claim 1 or 2, **characterized in that** a switch-off sequence and/or a prioritization for the electrical components (K1, K2, K3) connected to associated outputs (A1, A2, A3) can be predefined and/or is/are stored.

4. Regulating device (R) according to one of Claims 1 to 3,
**characterized in that** the connection of further electrical components (K1, K2, K3) is blocked if at least one other component (K1, K2, K3) has been previously switched off because an associated voltage threshold value has been undershot.

5. Regulating device (R) according to one of Claims 1 to 4,
**characterized in that** individual, independent periods of time can be respectively predefined for the electrical components (K1, K2, K3) connected to associated outputs (A1, A2, A3) for the duration for which an associated voltage threshold value is undershot from first detection to switching-off and/or are activated from stored values during installation when an output (A1, A2, A3) is occupied by a component (K1, K2, K3).

6. Regulating device (R) according to one of Claims 1 to 5,
**characterized in that** individual, independent periods of time can be respectively predefined for the electrical components (K1, K2, K3) connected to associated outputs (A1, A2, A3) and/or are activated from stored values during installation when an output (A1, A2, A3) is occupied by a component (K1, K2, K3), which periods of time delay the switching-on again after previous switching-off because an associated voltage threshold value was undershot.

7. Regulating device (R) according to one of Claims 1 to 6,
**characterized in that** electrical components (K1, K2, K3) which are connected to associated outputs (A1, A2, A3) and have safety relevance for the thermal apparatus or a connected heating and/or cooling system are switched off last.

8. Regulating device (R) according to one of Claims 1 to 7,
**characterized in that** the switching-off of electrical components (K1, K2, K3) because an associated voltage threshold value has been undershot is entered in an error and/or history memory.

9. Regulating device (R) according to one of Claims 1 to 8,
**characterized in that** the switching-off of electrical components (K1, K2, K3) because an associated voltage threshold value has been undershot is entered in an error and/or history memory only in the case of relatively great frequency, in particular if a predefinable number of switching-off operations is exceeded in a predefinable period.

10. Regulating device (R) according to one of Claims 1 to 9,
**characterized in that** the switching-off of electrical components (K1, K2, K3) because an associated voltage threshold value is undershot is signalled in a display and operating device at least for the switched-off duration, and **in that** a maintenance or fault signal is output if a predefinable number of switching-off operations is exceeded in a predefinable period.

## Revendications

1. Dispositif de réglage (R) pour un appareil thermodynamique de chauffage et/ou de refroidissement avec une partie de circuit combinatoire (NT) alimentée en tension de secteur (S1) ainsi qu'en très petite tension d'appareil (S2) du côté secondaire pour alimenter des composants électrotechniques, des dispositifs de réglage et de commutation servant au réglage, à l'allumage et à l'extinction des composants (K1, K2, K3) électrotechniques raccordés au dispositif de réglage au niveau de sorties associées, lesdits composants étant au moins en partie alimentés en tension de secteur (S1) ainsi que par au moins un dispositif d'affichage, de commande et d'utilisation, en option avec télésurveillance, **caractérisé en ce que** la tension de secteur (S1) est mesurée et analysée sur le côté principal de la partie de circuit combinatoire (NT) et que la très petite tension d'appareil (S2) est mesurée et analysée sur le côté secondaire et qu'au moins un composant (K1, K2, K3) électrotechnique raccordé à l'appareil de réglage est déconnecté lorsqu'au moins une des valeurs de tension mesurée passe en dessous de valeurs seuil de tension prédéfinissables pour les éléments et composants (K1, K2, K3) raccordés individuellement.

2. Dispositif de réglage (R) selon la revendication 1, **caractérisé en ce que** pour les composants électrotechniques (K1, K2, K3) raccordés aux sorties associées, des valeurs seuils de tension indépendantes sont respectivement prédéfinissables individuellement et/ou activées lorsqu'une sortie (A1, A2, A3) est occupée par un composant (K1, K2, K3) présentant les valeurs mémorisées lors de l'installation.

3. Dispositif de réglage (R) selon la revendication 1 ou 2, **caractérisé en ce qu'**une séquence de déconnexion et/ou une priorisation des composants électrotechniques (K1, K2, K3) raccordés aux sorties (A1, A2, A3) associées sont mémorisées et/ou peuvent être prédéfinies.

4. Dispositif de réglage (R) selon l'une quelconque des revendications 1 à 3, **caractérisé en ce que** la connexion de composants électrotechniques (K1, K2, K3) supplémentaires est bloquée lorsqu'auparavant, au moins un autre composant (K1, K2, K3) a été déconnecté du fait du passage en dessous d'une valeur seuil de tension associée.

5. Dispositif de réglage (R) selon l'une quelconque des revendications 1 à 4, **caractérisé en ce que** pour les composants électrotechniques (K1, K2, K3) raccordés aux sorties (A1, A2, A3) associées, des intervalles de temps indépendants individuels peuvent respectivement être prédéfinis pour la durée du passage en dessous d'une valeur seuil de tension associée, d'une première détection jusqu'à la déconnexion, et/ou sont activés lorsqu'une sortie (A1, A2, A3) est occupée par un composant (K1, K2, K3) présentant les valeurs mémorisées lors de l'installation.

6. Dispositif de réglage (R) selon l'une quelconque des revendications 1 à 5, **caractérisé en ce que** pour les composants électrotechniques (K1, K2, K3) raccordés aux sorties (A1, A2, A3) associées, des intervalles de temps indépendants individuels peuvent respectivement être prédéfinis et/ou sont activés lorsqu'une sortie (A1, A2, A3) est occupée par un composant (K1, K2, K3) présentant les valeurs mémorisées lors de l'installation, ces valeurs retardant la reconnexion après une déconnexion précédente provoquée par le passage en dessous d'une valeur seuil de tension associée.

7. Dispositif de réglage (R) selon l'une quelconque des revendications 1 à 6, **caractérisé en ce qu'**un système de chauffage et/ou de refroidissement raccordé est d'abord déconnecté au niveau des composants électrotechniques (K1, K2, K3) raccordés aux sorties (Al, A2, A3) associées pour garantir la sécurité de l'appareil thermodynamique.

8. Dispositif de réglage (R) selon l'une quelconque des revendications 1 à 7, **caractérisé en ce que** la déconnexion de composants électrotechniques (K1, K2, K3) provoquée par le passage en dessous d'une valeur seuil de tension associée est enregistrée dans une mémoire d'historique et/ou d'anomalies.

9. Dispositif de réglage (R) selon l'une quelconque des revendications 1 à 8, **caractérisé en ce que** la déconnexion de composants électrotechniques (K1, K2, K3) provoquée par le passage en dessous d'une valeur seuil de tension associée n'est enregistrée dans une mémoire d'historique ou d'anomalies qu'à une fréquence plus élevée, notamment en cas de dépassement d'un nombre prédéfinissable de déconnexions pendant un laps de temps prédéfinissable.

10. Dispositif de réglage (R) selon l'une quelconque des revendications 1 à 9, **caractérisé en ce que** la déconnexion de composants électrotechniques (K1, K2, K3) provoquée par le passage en dessous d'une valeur seuil de tension associée est signalée dans un dispositif d'affichage et de commande au moins pendant la durée de la déconnexion et qu'en cas de dépassement d'un nombre prédéfinissable de déconnexions pendant un laps de temps prédéfinissable, un signal d'entretien ou de panne est émis.
